# EUROPEAN PATENT SPECIFICATION

(11) **EP 2 741 131 B1**
(45) Date of publication and mention of the grant of the patent: **24.05.2017**
(21) Application number: 13194998.4
(22) Date of filing: 29.11.2013
(51) Int. Cl.: G02F 1/13363

(54) **Display panel and display device**
Anzeigetafel und Anzeigevorrichtung
Panneau d'affichage et dispositif d'affichage

(30) Priority: 07.12.2012 CN 201210526435
(43) Date of publication of application: 11.06.2014
(73) Proprietor: BOE Technology Group Co., Ltd., Beijing 100015 (CN)
(72) Inventor: SUZUKI, Teruaki, 100176 Beijing (CN); YANG, Yafeng, 100176 Beijing (CN); KIM, Kiman, 100176 Beijing (CN)
(74) Representative: Klunker . Schmitt-Nilson . Hirsch

(56) References cited:
- JP-A- H0 440 427
- JP-A- 2010 181 914

## Description

### FIELD OF THE ART

Embodiments of the invention relate to the technical field of liquid crystal displays, more particularly, to a display panel and a display device.

### BACKGROUND

Liquid Crystal Display (LCD) devices have the advantages of having light weight, small thickness, lower power consumption and little radiation and so on and have been widely used in the fields of information technology, multimedia technologies etc. and are gradually become mainstream display for various display devices. With the development of display technologies, the future trend of LCDs is high transmissivity, large scale, lower power consumption and low cost.

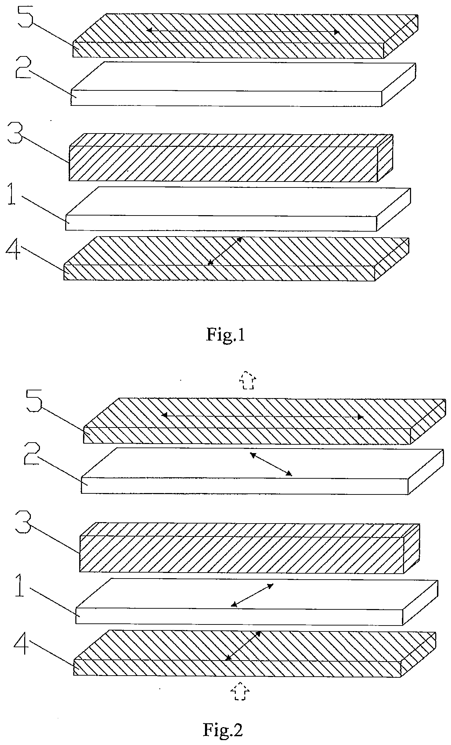

A configuration of a LCD panel is illustrated in Fig. 1, which comprises a lower substrate 1 (e.g. a glass substrate), an upper substrate 2 (e.g. a glass substrate) and a liquid crystal layer 3 filled between the two substrates. The lower substrate 1 and/or the upper substrate 2 has a transparent electrode layer formed thereon. A lower polarizer 4 is disposed on a light incident side of the lower substrate 1, an upper polarizer 5 is disposed on a light exiting side of the upper substrate 2. As illustrated by the solid arrows in Fig. 1, the absorbing axes of the lower and upper polarizers 4 and 5 are orthogonal to each other (being 0 degree and 90 degrees respectively). When no electric field is applied, light is incident from the lower polarizer 4 and a linearly polarized light is produced, with the polarization direction rotated by 90 degrees by the liquid crystal molecules, and then the light exits from the upper polarizer 5. At this point, the display panel renders the white background color. When an electric field is applied, the arrangement of the liquid crystal molecules is changed, and the linearly polarized light passes through the liquid crystal layer 3 without changing its polarization direction and is then absorbed by the upper polarizer 5, making it impossible to be transmitted. As a result, the display panel is black.

The display quality of the LCD is directly related to the brightness of the bright state and the dark state. For a high contrast ratio, theoretically it is supposed to achieve an all-dark state with very low brightness. However, in fact, as illustrated in Fig. 2, twist and deformation of the upper and lower glass substrates may cause the retardation amount of the polarized light passing through the glass substrates to change (the solid arrows in the upper and lower substrates 1, 2 of Fig. 2 illustrate the direction of the retardation amount caused by glass deformation), thereby causing uneven dark state of the LCD. When the linearly polarized light passes through the upper glass substrate 2, its polarization state is different from before incident on the lower glass substrate 1. As a result, the light is not totally absorbed by the upper polarizer 5 and a part of light is transmitted as illustrated by the dotted arrow in the figure, causing light leakage in the dark state and uneven display.

JP 2010 181 814 A discloses a IPS mode LC display panel in which, between a liquid crystal layer side support base material of a lower polarizing plate and a liquid crystal layer, an optical phase compensation member is disposed for canceling birefringence of the polarizing plate supporting base material. Alternatively, the optical phase compensation member for canceling the birefringence of the polarizing plate support base material may be disposed between the liquid crystal layer side support base material of an upper polarizing plate and the liquid crystal layer. By the optical phase compensation member increase of luminance and coloring in an oblique direction in a black display of the display panel is reduced.

JP H04 40427 A discloses a LC display element constituted by arraying a 1 st polarizing plate 1, a liquid crystal cell 2, a liquid crystal cell 3 for compensation as an optical compensating means, and the 2nd polarizing plate 4 in order from the light incidence side to the projection side. The liquid crystal cell 2 is formed by arraying Np nematic liquid crystal molecules homogeneously and matching the long-axis direction of the nematic liquid crystal molecules with the rubbing axis between a couple of substrates between which a liquid crystal layer is inserted. The compensation cell 3 is provided as the optical compensating means so as to cancel the retardation of the liquid crystal cell 2.

### SUMMARY

It is an object of the present invention to provide a display panel and a display device that can prevent light leakage in the dark state and uneven display caused by the deformation of the glass substrate.

The object is solved by the feature of the appended independent claim 1. Further embodiments and developments are defined in the respective dependent claims.

A first aspect of the invention provides a display panel, comprising a lower substrate, an upper substrate and a liquid crystal layer disposed between the upper substrate and the lower substrate, a lower polarizer is disposed at a light incident side of the lower substrate, an upper polarizer is disposed at a light exiting side of the upper substrate, the display panel further comprises a compensation layer disposed between the upper substrate and the liquid crystal layer and configured for converting a polarization direction of light exiting the upper substrate to the same as the polarization direction of light before incident on the lower substrate, wherein the long axis of the liquid crystal molecules in the liquid crystal layer is the same as the absorbing axis of the upper polarizer or the lower polarizer.

Furthermore, according to a first alternative of the display panel of the first aspect of the invention, the slow axis of the compensation layer is orthogonal to the long axis of the liquid crystal molecules in the liquid crystal layer, and a retardation amount of the compensation layer is the same as that of the liquid crystal layer.

Furthermore, according to a second alternative of the display panel of the first aspect of the invention, the slow axis of the compensation layer is in the same direction as the long axis of the liquid crystal molecules in the liquid crystal layer, and a sum of a retardation amount of the compensation layer and a retardation amount of the liquid crystal molecules is equal to a primary wavelength of incident light of the display panel.

As an example, the primary wavelength is 400-700nm.

As an example, the display panel further comprises a transparent electrode layer disposed on the light exiting side of the lower substrate and/or the light incident side of the upper substrate.

As an example, the compensation layer is made of cyclic olefin polymers macromolecular material, polycarbonates macromolecular material, polystyrenes macromolecular material or liquid crystal macromolecular material.

A second aspect of the invention provides a display device comprising the above display panel.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
Fig. 1 schematically illustrates a configuration of a conventional LCD panel;
Fig. 2 schematically illustrates the principle of light leakage caused by glass deformation of the display panel of Fig. 1;
Fig. 3 schematically illustrates a configuration of a display panel of Example 1;
Fig. 4 schematically illustrates the principle of dark state of the display panel of Example 1; and
Fig. 5 schematically illustrates the principle of dark state of a display panel of Example 2.

### DETAILED DESCRIPTION

In order to make objects, technical details and advantages of the embodiments of the invention apparent, the technical solutions of the embodiment will be described in a clearly and fully understandable way in connection with the drawings related to the embodiments of the invention. It is obvious that the described embodiments are just a part but not all of the embodiments of the invention. Based on the described embodiments herein, those skilled in the art can obtain other embodiment(s), without any inventive work, which should be within the scope of the invention as defined in the claims.

In the drawings, solid arrows in polarizers represent directions of the absorbing axis or the transmission axis, solid arrows in liquid crystal layers represent directions of the long axis of liquid crystal molecules, solid arrows in substrates represent retardation directions, and solid arrows in compensation layers represent the slow axis thereof.

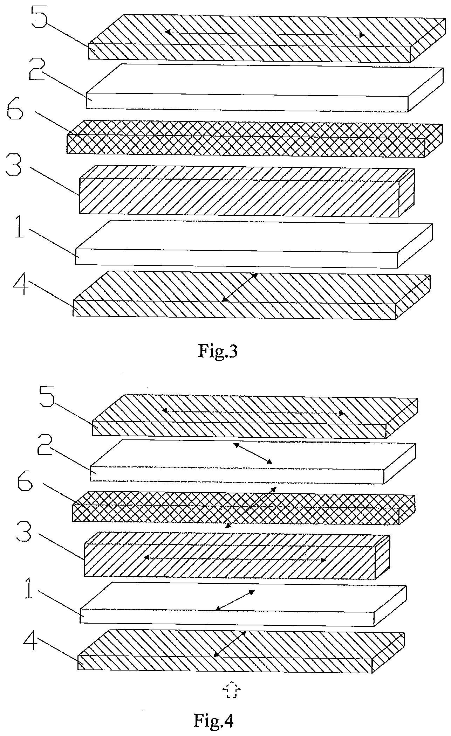

As illustrate in Fig. 3, a display panel in accordance with an embodiment of the invention comprises a lower substrate 1, an upper substrate 2 and a liquid crystal layer 3 disposed between the upper and lower substrates 2 and 1; a lower polarizer 4 is disposed on a light incident side of the lower substrate 1, an upper polarizer 5 is disposed on a light exiting side of the upper substrate 2, and the absorbing axes of the upper and lower polarizers 5 and 4 are orthogonal to each other. A transparent electrode layer (not shown) may also be disposed on light exiting side of the lower substrate 1 and/or light incident side of the upper substrate 2. The display panel further comprises a compensation layer 6 disposed between the upper substrate 2 and the liquid crystal layer 3. The compensation layer 6 is configured to convert the polarization direction of light exiting the upper substrate 2 to the same as the polarization direction of light before incident on the lower substrate 1, so as to effectively inhibit light leakage. For example, the compensation layer 6 may be made of macromolecular material, such as cyclic olefin polymers (COP), polycarbonates (PC) or polystyrenes (PS), etc, or liquid crystal macromolecular material.

In the following, the invention will be further described with reference to examples.

### Example 1

As illustrated in Fig. 4, in the example of the display panel, the long axis of liquid crystal molecules in the liquid crystal layer 3 is the same as the absorbing axis of the upper polarizer 5 (or the same as that of the lower polarizer 4). A retardation amount of the compensation layer 6 is the same as that of the liquid crystal layer 3, and the slow axis of the compensation layer 6 is orthogonal to the long axis of the liquid crystal molecules in the liquid crystal layer 3, thereby converting the polarization direction of light transmitted through the upper substrate 2 to the same as the polarization direction of the light before incident on the lower substrate 1. As a result, incident light as indicated by the dotted arrow is completely absorbed by the upper polarizer 5 and no light leakage will occur.

### Example 2

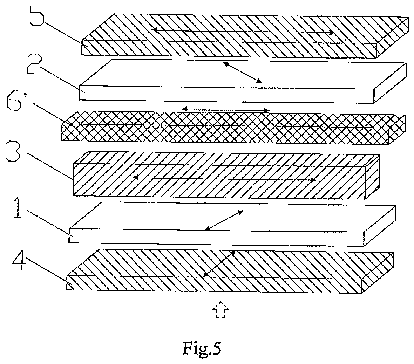

As illustrated in Fig. 5, in the display panel of the example, the long axis of liquid crystal molecules in the liquid crystal layer 3 is still the same as the absorbing axis of the upper polarizer 5. However, this example differs from example 1 in that the slow axis of the compensation layer 6' is in the same direction as the long axis of the liquid crystal molecules in the liquid crystal layer 3, and a sum of a retardation amount of the compensation layer 6' and a retardation amount of the liquid crystal molecules is equal to a primary wavelength of incident light of the display panel, which is for example 400-700nm, and typically 550nm, thereby converting the polarization direction of light transmitted through the upper substrate 2 to the same as the polarization direction of the light before incident on the lower substrate 1. As a result, incident light as indicated by the dotted arrow is completely absorbed by the upper polarizer 5 and no light leakage will occur.

Another embodiment of the invention further provides a display device comprising the above display panel. The display device may be for example a display device comprises transparent electrode layers respectively disposed on light exiting side of the lower substrate and light incident side of the upper substrate, or an ADvanced Super Dimension Switch (ADS) display device with a transparent electrode layer disposed just on light exiting side of the lower substrate. Other components well known to those skilled in the art will not be described here and are not limitative to the technical solutions of the invention.

In summary, the display panel and display device of the invention converts the polarization direction of light transmitted through the upper substrate to the same as the polarization direction of the light before incident on the lower substrate by disposing the compensation layer in the liquid crystal cell, thereby preventing light leakage in the dark state and uneven display caused by the deformation of the glass substrate. Meanwhile, the invention may minimize light leakage caused by glass substrate deformation under the condition of unchanging deformation property of the glass substrate.

What is described above is related to the illustrative embodiments of the disclosure only and not limitative to the scope of the invention; the scope of the invention is defined by the accompanying claims.

## Claims

1. A display panel, comprising a lower substrate (1), an upper substrate (2) and a liquid crystal layer (3) disposed between the upper substrate (2) and the lower substrate (1), a lower polarizer (4) is disposed at a light incident side of the lower substrate (1), an upper polarizer (5) is disposed at a light exiting side of the upper substrate (2), the display panel further comprises a compensation layer (6, 6') disposed between the upper substrate (2) and the liquid crystal layer (3), wherein the long axis of liquid crystal molecules in the liquid crystal layer (3) is the same as the absorbing axis of the upper polarizer (5) or the lower polarizer (4),
**characterized in that** the compensation layer (6, 6') is configured for converting the polarization direction of light so that light exiting the upper substrate (2) has the same as the polarization direction of the light before incident on the lower substrate (1) by
the slow axis of the compensation layer (6) being orthogonal to the long axis of the liquid crystal molecules in the liquid crystal layer (3), and a retardation amount of the compensation layer (6) being the same as that of the liquid crystal layer (3),
or the slow axis of the compensation layer (6') being in the same direction as the long axis of the liquid crystal molecules in the liquid crystal layer (3), and a sum of a retardation amount of the compensation layer (6') and a retardation amount of the liquid crystal molecules being equal to a primary wavelength of incident light of the display panel.

2. The display panel of claim 1, wherein the primary wavelength is 400-700nm.

3. The display panel of any of claims 1 or 2, further comprising a transparent electrode layer disposed on the light exiting side of the lower substrate (1) and/or the light incident side of the upper substrate (2).

4. The display panel of any of claims 1 to 3, wherein the compensation layer is made of cyclic olefin polymers macromolecular material, polycarbonates macromolecular material, polystyrenes macromolecular material or liquid crystal macromolecular material.

5. A display device comprising the display panel of any of claims 1 to 4.

## Patentansprüche

1. Anzeigepaneel mit einem unteren Substrat (1), einem oberen Substrat (2) und einer Flüssigkristallschicht (3), die zwischen dem oberen Substrat (2) und dem unteren Substrat (1) angeordnet ist, wobei ein unterer Polarisator (4) an einer Lichteintrittsseite des unteren Substrats (1) angeordnet ist, wobei ein oberer Polarisator (5) an einer Lichtaustrittsseite des oberen Substrats (2) angeordnet ist, wobei das Anzeigepaneel weiter eine Kompensationsschicht (6, 6') aufweist, die zwischen dem oberen Substrat (2) und der Flüssigkristallschicht (3) angeordnet ist, wobei die Längsachse der Flüssigkristallmoleküle in der Flüssigkristallschicht (3) dieselbe wie die Absorptionsachse des oberen Polarisators (5) oder des unteren Polarisators (4) ist,
**dadurch gekennzeichnet, dass** die Kompensationsschicht (6, 6') zum Konvertieren der Polarisationsrichtung von Licht konfiguriert ist, sodass Licht, das aus dem unteren Substrat (2) austritt, dieselbe wie die Polarisationsrichtung des Lichts vor Einfall auf das untere Substrat (1) aufweist, dadurch,
dass die langsame Achse der Kompensationsschicht (6) orthogonal zu der Längsachse der Flüssigkristallmoleküle in der Flüssigkristallschicht (3) ist, und ein Verzögerungsbetrag der Kompensationsschicht (6) derselbe wie der der Flüssigkristallschicht (3) ist, oder
dass die langsame Achse der Kompensationsschicht (6') in derselben Richtung wie die Längsachse der Flüssigkristallmoleküle in der Flüssigkristallschicht (3) liegt, und eine Summe eines Verzögerungsbetrags der Kompensationsschicht (6') und eines Verzögerungsbetrags der Flüssigkristallmoleküle gleich einer primären Wellenlänge einfallenden Lichts des Anzeigepaneels ist.

2. Anzeigepaneel gemäß Anspruch 1, wobei die primäre Wellenlänge 400-700 nm beträgt.

3. Anzeigepaneel gemäß einem der Ansprüche 1 oder 2, weiter aufweisend eine transparente Elektrodenschicht, die auf der Lichtaustrittsseite des unteren Substrats (1) und/oder der Lichteinfallsseite des oberen Substrats (2) angeordnet ist.

4. Anzeigepaneel gemäß einem der Ansprüche 1 bis 3, wobei die Kompensationsschicht aus einem zyklischen Olefinpolymer-Makromolekularmaterial, einem Polykarbonat-Makromolekularmaterial, einem Polystyren-Makromolekularmaterial oder einem Flüssigkristall-Makromolekularmaterial hergestellt ist.

5. Anzeigevorrichtung mit dem Anzeigepaneel gemäß einem der Ansprüche 1 bis 4.

## Revendications

1. Panneau d'affichage, comprenant un substrat inférieur (1), un substrat supérieur (2) et une couche de cristaux liquides (3) disposés entre le substrat supérieur (2) et le substrat inférieur (1), un polarisateur inférieur (4) est disposé sur un côté d'incidence de lumière du substrat inférieur (1), un polarisateur supérieur (5) est disposé sur un côté de sortie de lumière du substrat supérieur (2), le panneau d'affichage comprenant en outre une couche de compensation (6, 6') disposée entre le substrat supérieur (2) et la couche de cristaux liquides (3), dans lequel l'axe long des molécules de cristaux liquides dans la couche de cristaux liquides (3) est identique à l'axe d'absorption du polarisateur supérieur (5) ou du polarisateur inférieur (4),
**caractérisé en ce que** la couche de compensation (6, 6') est configurée pour convertir la direction de polarisation de la lumière, de sorte que la lumière sortant du substrat supérieur (2) présente la même que la direction de polarisation de la lumière avant incidence sur le substrat inférieur (1), et par
l'axe lent de la couche de compensation (6) étant orthogonal à l'axe long des molécules de cristaux liquides dans la couche de cristaux liquides (3), et une quantité de retard de la couche de compensation (6) étant identique à celle de la couche de cristaux liquides (3), ou
l'axe lent de la couche de compensation (6') étant dans la même direction que l'axe long des molécules de cristaux liquides dans la couche de cristaux liquides (3), et une somme d'une quantité de retard de la couche de compensation (6') et d'une quantité de retard des molécules de cristaux liquides étant égale à une longueur d'onde primaire de la lumière incidente du panneau d'affichage.

2. Panneau d'affichage selon la revendication 1, dans lequel la longueur d'onde primaire est de 400-700 nm.

3. Panneau d'affichage selon la revendication 1 ou 2, comprenant en outre une couche d'électrode transparente disposée sur le côté de sortie de lumière du substrat inférieur (1) et/ou sur le côté d'incidence de lumière du substrat supérieur (2).

4. Panneau d'affichage selon l'une quelconque des revendications 1 à 3, dans lequel la couche de compensation est fabriquée dans un matériau macromoléculaire de polymères d'oléfines cycliques, un matériau macromoléculaire de polycarbonates, un matériau macromoléculaire de polystyrènes et un matériau macromoléculaire de cristaux liquides.

5. Dispositif d'affichage comprenant le panneau d'affichage selon l'une quelconque des revendications 1 à 4.
